# EUROPEAN PATENT APPLICATION

(11) **EP 2 988 109 A1**
(43) Date of publication of application: **24.02.2016**
(21) Application number: 14785772.6
(22) Date of filing: 07.04.2014
(51) Int. Cl.: G01M 17/02, B60C 19/00

(54) **TIRE MEASURING TOOL AND TIRE MEASURING METHOD**

(30) Priority: 18.04.2013 JP 2013087586
(71) Applicant: Bridgestone Corporation, Tokyo 104-8340 (JP)
(72) Inventor: ABE Tomohiko, Kodaira-shi Tokyo 187-8531 (JP)
(74) Representative: Oxley, Robin John George
(86) International application number: PCT/JP2014/060112
(87) International publication number: WO 2014/171360

(57) **Abstract**

A tire measuring tool (1) is provided with a piercing member (11) that pierces the surface of a tire; and a measuring terminal (12) built in the piercing member (11). The measuring tool (1) is used after the measuring terminal (12) is connected to a main measuring tool body that receives output signals from the measuring terminal (12). The piercing member (11) has a first end (14) having a pointed shape with a diameter that is gradually reduced toward the tip thereof, and a second end (15) formed in a flange shape overhanging outward in a radial direction, thus allowing the measuring terminal to be easily attached to the tire.

## Description

### Technical Field

The present invention relates to a tire measuring tool and a tire measuring method.

Priority is claimed on Japanese Patent Application No. 2013-087586, filed April 18, 2013, the content of which is incorporated herein by reference.

### Background Art

In the related art, as a method of measuring a tire, for example, as shown in the following Patent Document 1, a method of measuring infrared rays radiated from the inside of a non-through hole formed in an outer surface of a tire with an infrared thermometer that is a non-contact-type thermometer, and measuring the temperature inside the tire is known.

Additionally, as another method, for example, a method of attaching a measuring terminal, such as a thermocouple, to a tire, and measuring the state of the tire, such as a temperature, is known. For the attachment of such a measuring terminal to the tire, a method of forming a non-through hole in the outer surface of the tire with a drill and then inserting the measuring terminal into this hole, or of vulcanizing a non-vulcanized tire in which the measuring terminal is buried is known.

### Citation List

### Patent Document

[Patent Document 1] Japanese Unexamined Patent Application, First Publication No. 2001-208618

### Summary of Invention

### Technical Problem

In the above related-art tire measuring methods, there is a problem in that attachment of the measuring terminal to the tire takes a substantial amount of time and effort.

The invention has been made in consideration of such circumstances, and an object thereof is to provide a tire measuring tool and a tire measuring method that can easily attach a measuring terminal to a tire.

### Solution to Problem

In order to solve the above problem and achieve such an object, a tire measuring tool of the invention includes a piercing member that pierces the surface of a tire; and a measuring terminal built into the piercing member. The measuring tool is used after the measuring terminal is connected to a main measuring tool body that receives an output signal from the measuring terminal. The piercing member has a first end having a pointed shape with a diameter which is gradually reduced toward the tip thereof, and a second end formed in a flange shape overhanging outward in a radial direction.

According to this invention, the first end of the piercing member is formed in the pointed shape. For example, even if the outer surface of the tire is not subjected to drilling or the like, it is possible to advance and bury the first end-side portion of the piercing member located closer to the first end side than the second end into the tire simply by piercing the surface of the tire with the first end of the piercing member.

Moreover, even if drilling is not performed, it is possible to bury the first end-side portion within the tire. Therefore, the first end-side portion can be easily buried within the tire not only from the outer surface side of the tire but also from the inner surface side.

Additionally, the piercing member may be formed with a mounting hole that opens on the second end side, is closed on the first end side, and allows the measuring terminal to be inserted thereinto.

In this case, the mounting hole is formed in the piercing member. Thus, it is possible to select the type of the measuring terminal built into the piercing member, for example, when performing measurement. Otherwise, it is possible to extract only the measuring terminal from the mounting hole with the surface of the tire being pierced with the piercing member after the end of measurement, and then to mount another measuring terminal on the mounting hole of the same piercing member. Therefore, handling becomes easier compared to a configuration in which both of the measuring terminal and the piercing member are integrally formed by, for example, casing or injection-molding the piercing member using the measuring terminal as an insert article.

Moreover, a tire measuring method of the invention includes using the tire measuring tool of the invention; piercing an inner surface of the surface of the tire that defines an internal space of the tire from the first end-side by the piercing member; and measuring the tire in a state where the main measuring tool body is disposed in the internal space of the tire.

According to this invention, it is possible to measure the tire in a state where the piercing member pierces the inner surface of the tire from the first end-side portion and the main measuring tool body is disposed in the internal space of the tire. Moreover, it is possible to locate an entire measuring device including the piercing member, the measuring terminal, the main measuring tool body, and a wiring line connecting the main measuring tool body and the measuring terminal in the internal space of the tire when performing measurement. Therefore, it becomes easy to measure, for example, a tire that is traveling on a driveway in a state where the measuring device is mounted on a vehicle. Additionally, it is also possible to limit the length of the aforementioned wiring line, and installation of this measuring device to the tire can be easily performed.

In addition, when drilling is performed on the tire to form a non-through hole and the measuring terminal is arranged within this hole, drilling is performed on the outer surface of the tire. However, since drilling cannot be performed on the inner surface of the tire, the measuring terminal cannot be inserted from the inner surface side of the tire, and can be inserted only from the outer surface side. Therefore, in this case, the main measuring tool body for connecting the measuring terminal is forced to be located outside the tire. Therefore, the tire that is traveling on a driveway in a state where the measuring device is mounted on a vehicle cannot be measured. Additionally, it also becomes difficult to limit the length of the aforementioned wiring line.

Here, a first end-side portion of the piercing member may measure the tire by piercing the surface of the tire in which the implanting interval of steel cords buried inside the tire is equal to or more than the external diameter of a maximum external diameter portion in the first end-side portion located closer to the first end side than the second end.

In this case, the implanting interval of steel cords buried inside the wire to be measured becomes equal to or more than the external diameter of the maximum external diameter portion in the first end-side portion of the piercing member. Therefore, when the first end-side portion of the piercing member is advanced into the tire, it is possible to limit the first end-side portion from hitting the steel cords and this advance is hindered.

### Advantageous Effects of Invention

According to the tire measuring tool and the tire measuring method related to the invention, the measuring terminal can be easily attached to the tire.

### Brief Description of the Drawings

FIG. 1 is a longitudinal sectional view of a tire measuring tool shown as a first embodiment related to the invention.
FIG. 2 is a schematic view showing a state where the tire measuring tool of FIG. 1 is mounted on a tire.
FIG. 3 is a longitudinal sectional view of a tire measuring tool shown as a second embodiment related to the invention.
FIG. 4 is a longitudinal sectional view of a tire measuring tool shown as a third embodiment related to the invention.
FIG. 5 is a longitudinal sectional view of a tire measuring tool shown as a fourth embodiment related to the invention.
FIG. 6 is a longitudinal sectional view of a tire measuring tool shown as a fifth embodiment related to the invention.
FIG. 7 is a longitudinal sectional view of a tire measuring tool shown as a sixth embodiment related to the invention.
FIG. 8 is a partially longitudinal sectional view of a tire measuring tool shown as a seventh embodiment related to the invention.
FIG. 9 is a longitudinal sectional view of a tire measuring tool shown as an eighth embodiment related to the invention.

### Description of Embodiments

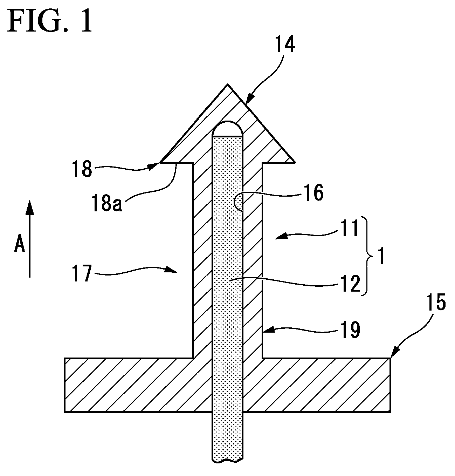

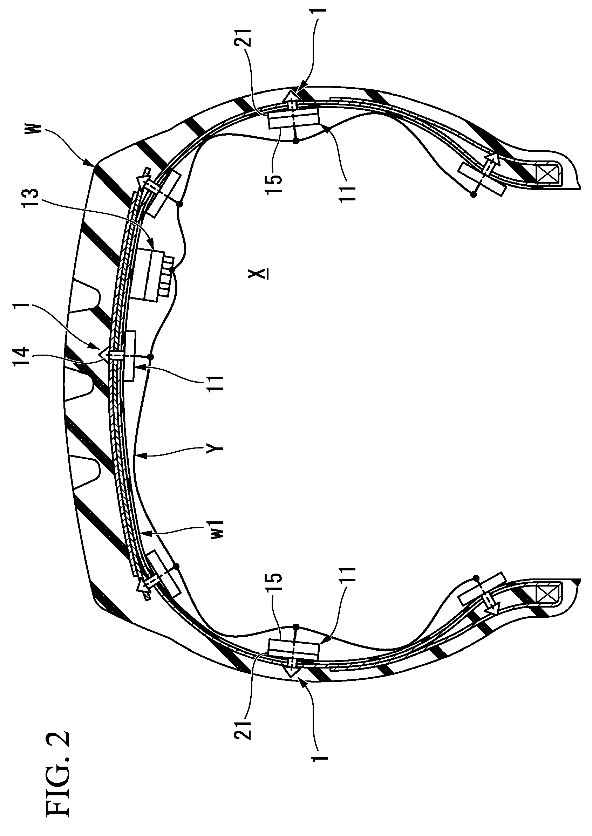

Hereinafter, an embodiment of a tire measuring tool related to the invention will be described, with reference to FIGS. 1 and 2.

A tire measuring tool 1 of the present embodiment includes a piercing member 11 that pierces the surface of a tire W, and a measuring terminal 12 built into the piercing member 11. The measuring tool 1 is used after the measuring terminal 12 is connected to a main measuring tool body 13 that receives output signals from the measuring terminal 12.

The measuring terminal 12 includes sensors, such as a thermocouple, a strain gauge, and an accelerometer, which measure temperature, strain, vibration, displacement, force, and the like, and outputs the acquired data.

In the piercing member 11, a first end 14 is formed in a pointed shape with a diameter which is gradually reduced toward the tip thereof. Additionally, a second end 15 is formed in a flange shape protruding outward in a radial direction. In addition, the piercing member 11 is integrally formed of, for example, iron, silver, copper, or alloys thereof, or synthetic resin materials.

In the piercing member 11, an engaging protrusion 18 is provided to protrude from an outer peripheral surface of a first end-side portion 17 that is located closer to the first end 14 side than the second end 15. The engaging protrusion 18 is engaged with the portion of the wire W adjacent to the engaging protrusion 18 in a direction opposite to a piercing direction A pointing from the second end 15 side toward the first end 14 side, in a state where the first end-side portion 17 pierces the surface of the tire W and is buried inside the tire W.

Moreover, in the present embodiment, the engaging protrusion 18 has an engaging surface 18a that points to the above opposite direction. In the shown example, the engaging protrusion 18 is formed integrally with the first end 14 of the piercing member 11, and is formed in a spindle shape with a diameter which is gradually reduced from the second end 15 side toward the first end 14 side, and the end surface, on the second end 15 side, of this outer surface pointing to the above opposite direction becomes an engaging surface 18a. In addition, an outer peripheral surface of an intermediate portion 19 that is located closer to the second end 15 side than the first end

14 in the first end-side portion 17 of the piercing member 11 extends in the piercing direction A parallel thereto. Accordingly, a maximum external diameter portion in the first end-side portion 17 of the piercing member 11 is a portion where the engaging surface 18a of the engaging protrusion 18 is located.

Additionally, the piercing member 11 is formed with a mounting hole 16 that opens on the second end 15 side and is closed on the first end 14 side. The measuring terminal 12 is inserted into and mounted on the mounting hole 16 from the opening on the second end side 15 of the piercing member 11 toward the first end 14 side.

Next, a method of measuring the tire W using the measuring tool 1 configured as above will be described.

First, the piercing member 11 pierces an inner surface w1 in the surface of the tire W, which defines an internal space X of the tire W, from the first end 14 side.

In this case, the implanting interval of steel cords buried inside the tire W becomes equal to or more than the external diameter of a portion where the engaging surface 18a of the first end-side portion 17 is located.

In addition, if necessary, as shown in FIG. 2, a plurality of the piercing members 11 separately pierces the tire W in a plurality of places. Additionally, if necessary, by interposing a spacer 21, such as a washer, between the second end 15 of the piercing member 11 and the inner surface w1 of the tire W, the position of the measuring terminal 12 along the piercing direction A within the tire W is adjusted, for example, by lessening the amount of advance of the piercing member 11 into the tire W.

Then, an entire measuring device including the piercing member 11, the measuring terminal 12, the main measuring tool body 13, and a wiring line Y connecting the main measuring tool body 13 and the measuring terminal 12 is located in the internal space X of the tire W. In this case, in the shown example, the main measuring tool body 13 is arranged in the portion of the inner surface w1 of the tire W where a tread portion is located. Thereafter, the tire W is mounted on a vehicle together with the measuring device, the main measuring tool body 13 receives the output signals from the measuring terminal 12 while the vehicle is made to travel on a driveway, and the tire W is measured, storing required data serially while processing is performed if necessary.

As described above, according to the tire measuring tool 1 related to the present embodiment, the first end 14 of the piercing member 11 is formed in the pointed shape. Therefore, for example, even if the outer surface of the tire W is not subjected to drilling or the like, it is possible to advance and bury the first end-side portion 17 into the tire W simply by piercing the surface of the tire W with the first end 14 of the piercing member 11.

Additionally, the engaging protrusion 18 is provided to protrude from the first end-side portion 17 of the piercing member 11. Thus, as the engaging protrusion 18 is engaged with the portion of the tire W adjacent to the engaging protrusion 18 in the above opposite direction in a state where the first end-side portion 17 pierces the surface of the tire W and is buried within the tire W, it is possible to restrict the movement of the piercing member 11 in the above opposite direction, and it is possible to prevent the piercing member 11 from slipping out of the tire W.

Additionally, even if drilling is not performed, it is possible to bury the first end-side portion 17 of the piercing member 11 within the tire W. Therefore, the first end-side portion 17 can be easily buried within the tire W not only from the outer surface side of the tire W but from the inner surface w1 side.

Moreover, since the engaging protrusion 18 has the engaging surface 18a, it is possible to cause the engaging protrusion 18 to cut toward the inside of the tire W in a direction intersecting the piercing direction A. Therefore, the piercing member 11 is strongly engaged with the tire W, so that and the piercing member 11 can be reliably inhibited from slipping out of the tire W.

Additionally, since the mounting hole 16 is formed in the piercing member 11, it is possible to select the type of the measuring terminal 12 built into the piercing member 11, for example, when performing measurement. Otherwise, it is possible to extract only the measuring terminal 12 from the mounting hole 16 with the surface of the tire W being pierced with the piercing member 11 after the end of measurement, and then to mount another measuring terminal 12 on the mounting hole 16 of the same piercing member 11. Therefore, handling becomes easier compared to a configuration in which both of the measuring terminal 12 and the piercing member 11 are integrally formed, for example, by casing or injection-molding the piercing member 11 using the measuring terminal 12 as an insert article.

Moreover, according to the tire measuring method related to the present embodiment, it is possible to pierce the inner surface w1 of the tire W from the first end 14 side with the piercing member 11. In addition, since the tire W is measured in a state where the main measuring tool body 13 is disposed in the internal space X of the tire W, it is possible to locate the entire measuring device including the piercing member 11, the measuring terminal 12, the main measuring tool body 13, and the aforementioned wiring line Y in the internal space X of the tire W when performing measurement. Therefore, it becomes easy to measure, for example, the tire W that is traveling on a driveway in a state where the measuring device is mounted on a vehicle, and it is also possible to limit the length of the aforementioned wiring line Y That is, installation of this measuring device to the tire W can be easily performed.

Additionally, the implanting interval of steel cords buried inside the wire W to be measured becomes equal to or more than the external diameter of the maximum external diameter portion in the first end-side portion 17 of the piercing member 11. Therefore, when the first end-side portion 17 of the piercing member 11 is advanced into the tire W, it is possible to limit the first end-side portion 17 from hitting the steel cords and this advance is hindered.

Additionally, since the main measuring tool body 13 is arranged in the portion of the inner surface w1 of the tire W where a tread portion is located, it is possible to limit the main measuring tool body 13 from being separated from the tire W at the time of measurement.

In addition, the technical scope of the invention is not limited to the aforementioned embodiment, and various changes can be made without departing from the concept of the invention.

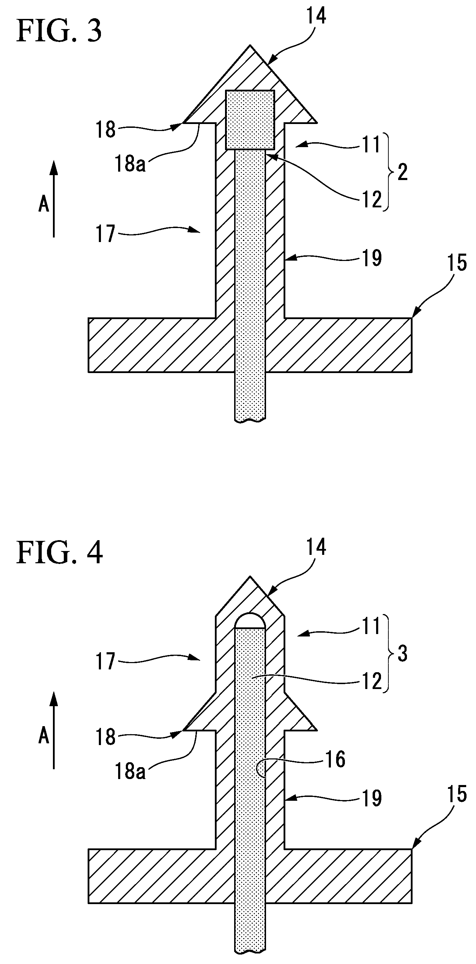

For example, a configuration in which the mounting hole 16 is formed in the piercing member 11 and the measuring terminal 12 is inserted into the mounting hole 16 has been shown in the above embodiment. Therefore, a measuring tool 2 may be adopted in which both of the measuring terminal 12 and the piercing member 11 are integrally formed as shown in FIG. 3 by casing or injection-molding the piercing member 11 using the measuring terminal 12 as an insert article.

Additionally, as shown in FIG. 4, a measuring tool 3 may be adopted in which the engaging protrusion 18 having the engaging surface 18a is separated from the first end 14 to the second end 15 side and is disposed at the intermediate portion 19 of the first end-side portion 17.

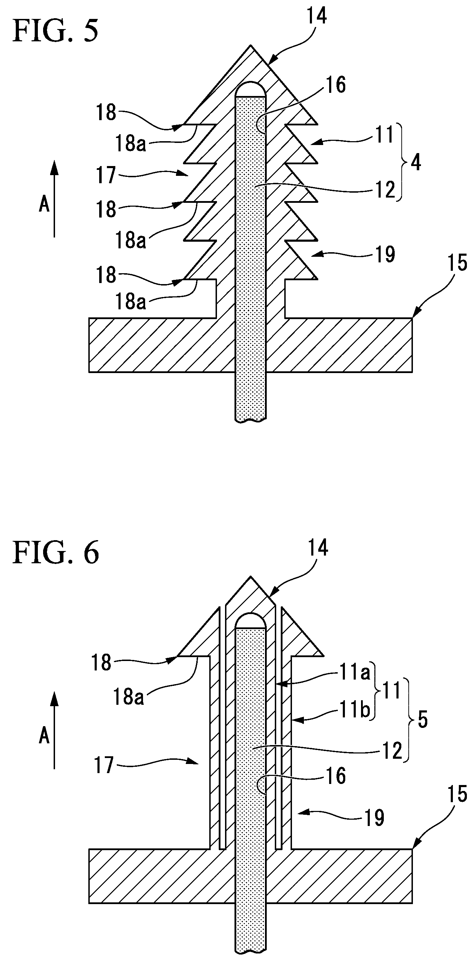

Moreover, as shown in FIG. 5, a measuring tool 4 may be adopted in which a plurality of the engaging protrusions 18 having the engaging surface 18a are continuously provided along the piercing direction A at the first end-side portion 17.

Additionally, as shown in FIG. 6, a measuring tool 5 may be adopted in which the piercing member 11 is split into a plurality of pieces in the radial direction.

In the shown example, the piercing member 11 includes an inner cylinder 11 a that is formed with the mounting hole 16 and has the measuring terminal 12 mounted on the mounting hole 16 and an outer cylinder 11b in which the inner cylinder 11a is built. A first end of the inner cylinder 11 a is formed in a pointed shape with a diameter which is gradually reduced toward the tip thereof. An outer peripheral surface of the portion of the inner cylinder 11 a located closer to the second end side than the first end extends in the direction A parallel thereto. The engaging protrusion 18 having the engaging surface 18a is provided to protrude from the first end of the outer cylinder 11b. The first end of the outer cylinder 11b opens in the piercing direction A, and the first end of the inner cylinder 11 a protrudes in the piercing direction A through this opening.

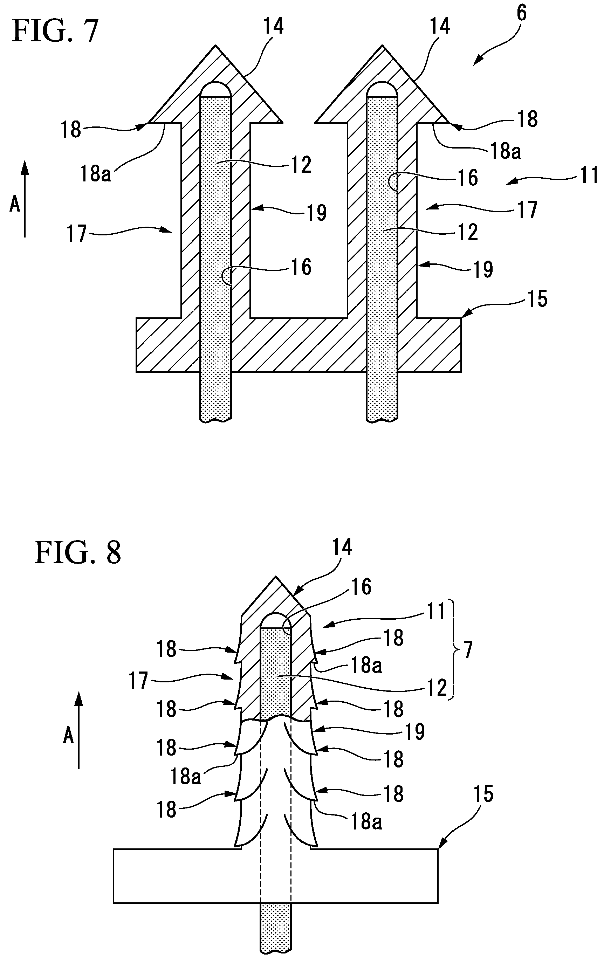

Moreover, as shown in FIG. 7, a measuring tool 6 may be adopted in which one second end 15 and a plurality of the first end-side portions 17 are integrally formed, the mounting hole 16 is formed in each of the first end-side portions 17, and the measuring terminal 12 is mounted on each mounting hole 16.

Additionally, as shown in FIG. 8, a measuring tool 7 may be adopted in which a plurality of the engaging protrusions 18 are continuously provided along both directions of the piercing direction A and a circumferential direction circling around a central axis of the piercing member 11 extending in the piercing direction A, and the amount of protrusion of each of the engaging protrusions 18 toward a radial outer side is made gradually larger from the first end 14 side toward the second end 15 side.

In the shown example, the length of the engaging protrusion 18 in the circumferential direction becomes gradually shorter from the first end 14 side toward the second end 15 side, and the circumferential spacing between the engaging protrusions 18 adjacent to each other in the circumferential direction becomes gradually larger from the first end 14 side toward the second end 15 side. The engaging protrusions 18 allow the first end-side portion 17 to assume a squamate pattern as seen from the radial outer side.

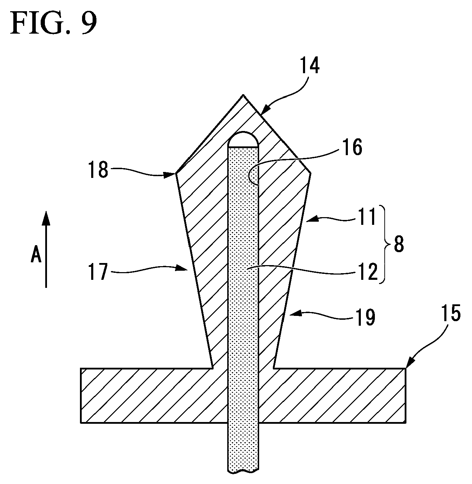

Moreover, as shown in FIG. 9, a measuring tool 8 may be adopted in which the engaging surface 18a is not provided, and the external diameter of the intermediate portion 19 of the first end-side portion 17 is made to have a diameter which is gradually increased from the second end 15 side toward the first end 14 side.

The piercing member 11 may pierce the outer surface of the tire W.

Additionally, in the above respective embodiments, the engaging protrusion 18 is provided in the piercing member 11. However, the engaging protrusion 18 may not be provided.

In addition, the constituent elements in the above-described embodiments can be substituted with well-known constituent elements without departing from the scope of the invention. Additionally, the above-described modifications may be appropriately combined.

### Industrial Applicability

The measuring terminal can be easily attached to tires.

### Reference Signs List

- 1 TO 8:: MEASURING TOOL
- 11:: PIERCING MEMBER
- 12:: MEASURING TERMINAL
- 13:: MAIN MEASURING TOOL BODY
- 14:: FIRST END
- 15:: SECOND END
- 16:: MOUNTING HOLE
- 17:: FIRST END-SIDE PORTION
- 18:: ENGAGING PROTRUSION
- 18a:: ENGAGING SURFACE
- A:: PIERCING DIRECTION
- X:: INTERNAL SPACE
- W:: TIRE
- w1:: INNER SURFACE

## Claims

1. A tire measuring tool comprising:
a piercing member that pierces the surface of a tire; and
a measuring terminal built into the piercing member,
wherein the measuring tool is used after the measuring terminal is connected to a main measuring tool body that receives an output signal from the measuring terminal, and
wherein the piercing member has a first end having a pointed shape with a diameter which is gradually reduced toward the tip thereof, and a second end formed in a flange shape overhanging outward in a radial direction.

2. The tire measuring tool according to Claim 1,
wherein the piercing member is formed with a mounting hole that opens on the second end side, is closed on the first end side, and allows the measuring terminal to be inserted thereinto.

3. A tire measuring method comprising:
using the tire measuring tool according to Claim 1;
piercing an inner surface of the surface of the tire that defines an internal space of the tire from the first end-side by the piercing member; and
measuring the tire in a state where the main measuring tool body is disposed in the internal space of the tire.

4. The tire measuring method according to Claim 3,
wherein a first end-side portion of the piercing member measures the tire by piercing the surface of the tire in which the implanting interval of steel cords buried inside the tire is equal to or more than the external diameter of a maximum external diameter portion in the first end-side portion located closer to the first end side than the second end.
